# EUROPEAN PATENT APPLICATION

(11) **EP 2 738 913 A2**
(43) Date of publication of application: **04.06.2014**
(21) Application number: 13180640.8
(22) Date of filing: 16.08.2013
(51) Int. Cl.: H02K 1/14, H02K 5/08, H02K 1/18

(54) **Stator of brushless motor with outer rotor and its manufacturing method**

(30) Priority: 30.11.2012 CN 201210505002
(71) Applicant: Zhongshan Broad-Ocean Motor Co., Ltd., Guangdong 528400 (CN)
(72) Inventor: Tang, Songfa, 528400 Zhongshan (CN); Jin, Jianwei, 528400 Zhongshan (CN)
(74) Representative: Hryszkiewicz, Danuta

(57) **Abstract**

A stator for a brushless motor with outer rotor. The stator includes a stator core (1,2), a winding (4) and a bobbin (3). The stator core is made out of a yoke part (2) and separated tooth parts (1). Each tooth part (1) includes an engaging portion (13). Each tooth part (1) comprises a stack of silicon-steel sheets. The bobbin (3) is sleeved onto the tooth part (1) and the winding (4) is wound around the bobbin (3). The yoke part (2) is made out of a powder comprising magnetically permeable material and it includes a mounting hole (21) in its centre. The yoke part (2) includes further a plurality of alternating lug bosses (22) and engaging grooves (23) on its outer circumference. The engaging portion (13) of the tooth part (1) fits into a engaging groove (23).

## Description

The invention relates to a stator for a brushless external-rotor motor and manufacturing method thereof.

The traditional stator core component for a brushless external-rotor motor is generally formed by overlapping silicon-steel sheets and then winding the overlapped silicon-steel sheets. The technology has the defects of slow winding, difficulty in embedding and more waste in cores, thus the cost is relatively high, the production efficiency is low, the integrity is poor, and the protection and insulation to windings are also relatively poorer.

In view of the above-described problems, it is one objective of the invention to provide a stator for a brushless external-rotor motor. The stator for a brushless external-rotor motor has the advantages of easiness in winding, saved material, reduced cost, good integrity and better protection and insulation to windings.

The objective is achieved according to the following technical schemes.

A stator for a brushless external-rotor motor, comprises: a stator core, the stator core comprising a yoke part and a tooth part which are separated, the tooth part comprising a clamping part; a winding; and an end insulator. The tooth part is formed by overlapping a plurality of silicon-steel sheets. The end insulator is sleeved on the tooth part. The winding is wound on the end insulator. The yoke part is formed by molding permeability magnetic material and comprises a mounting hole in a center. A plurality of lug bosses protrudes at intervals on an outer side of the yoke par. A clamping groove is formed between two connected lug bosses. The clamping part of the tooth part is nested in the clamping groove.

The stator core, the winding, and the end insulator are clad with an injection mold.

The permeability magnetic material adopts sendust material.

The clamping part is a dovetail lug boss, and the clamping groove is a dovetail groove.

The injection mold comprises an upper end plate and a lower end plate which are positioned at two ends of the stator core respectively, and a connecting column, the connecting column is connected with the upper end plate and the lower end plate.

A plurality of through holes is circumferentially formed on the yoke part, and one part of the connecting column penetrates the through holes.

The other part of the connecting column is positioned outside the lug bosses.

The tooth part comprises a tooth crown on an outer side, and the tooth crown is exposed out of the injection mold.

Compared with the prior art, the stator for a brushless external-rotor motor has the benefits that: (1) the stator core comprises a yoke part and a tooth part which are separated, the tooth part is formed by overlapping a plurality of silicon-steel sheets, the yoke part is formed by molding permeability magnetic material, a mounting hole is formed in the center of the yoke part, the yoke part is clamped with the tooth part, there is no material waste in the manufacture of the yoke part, the tooth part has a simple structure and small volume, thus the material waste in the stamping process is reduced to the utmost extent, the manufacturing cost of the stator core is reduced, after calculation, compared with the traditional core formed by integral stamping and overlapping, the cost of the stator core manufactured in this invention is reduced by 15%-30%, and the processing and the winding are convenient; (2) the stator core, winding and end insulator are clad with an injection mold, thus the integrity is strong, and the stator for a brushless external-rotor motor has the functions of waterproof and impact-proof protection.

A method for manufacturing the stator for a brushless external-rotor motor, the method comprises the following steps:

a) manufacturing stamped silicon-steel sheets according to the shape of the tooth part, and overlapping the silicon-steel sheets into the tooth part;

b) sleeving the end insulator outside the tooth part, and winding the winding on the end insulator;

c) according to the shape of the yoke part, molding the yoke part with sendust permeability magnetic material;

d) nesting a plurality of tooth parts installed with the end insulator and the winding on the outer side of the yoke part; and

e) integrating the end insulator, the winding, the tooth part, and the yoke part by injection-molding.

Compared with the prior art, the manufacturing method of the motor stator has the benefits that: (1) the stator core comprises a yoke part and a tooth part which are separated, wherein the tooth part is formed by overlapping a plurality of silicon-steel sheets, the yoke part is formed by molding permeability magnetic material, thus the scrap waste in the stamping process is reduced, and the cost is reduced; (2) the tooth part is separated, so as to be convenient for winding, thus the process is simple, and the production efficiency is improved; (3) the end insulator, winding, tooth part and yoke part are formed into a whole by injection molding, thus the integrity is good, the large-scale production is favorable, and the waterproof and impact-proof protection functions are good.

FIG. 1 is a plane diagram of installation of a yoke part and a tooth part of a stator core;

FIG. 2 is a three-dimensional diagram of a wound tooth part of the stator core;

FIG. 3 is an assembly diagram of a stator core;

FIG. 4 is a three-dimensional diagram of an injection-molded stator for a brushless external-rotor motor;

FIG. 5 is a front view of an injection-molded stator for a brushless external-rotor motor;

FIG. 6 is an A-A cutaway view of FIG. 5; and

FIG. 7 is a B-B cutaway view of FIG. 5.

The following specific embodiments and drawings aim to serve as the further description for the stator for a brushless external-rotor motor.

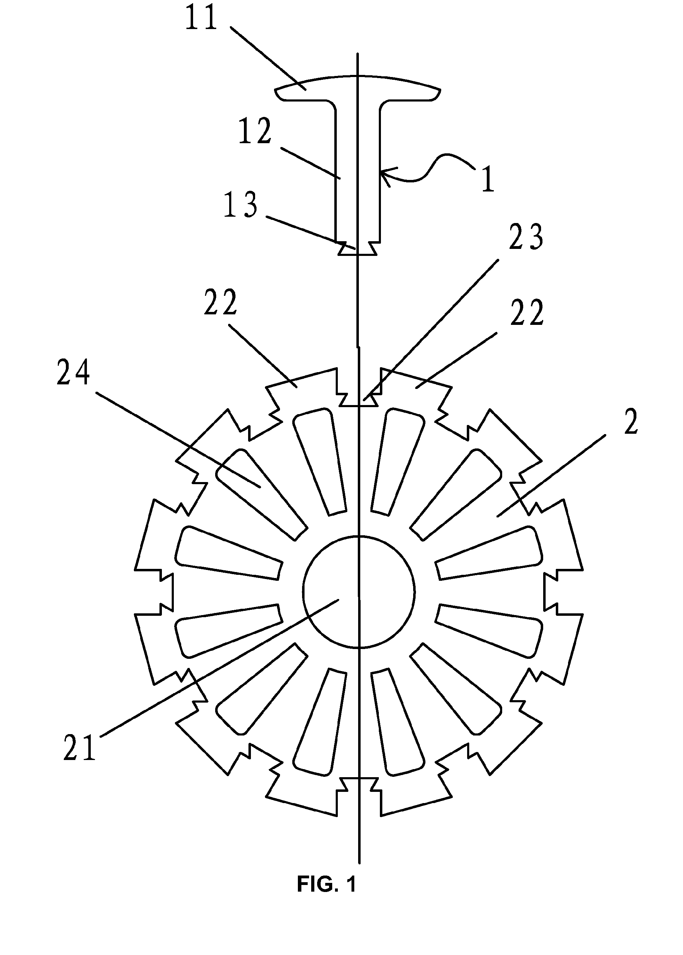

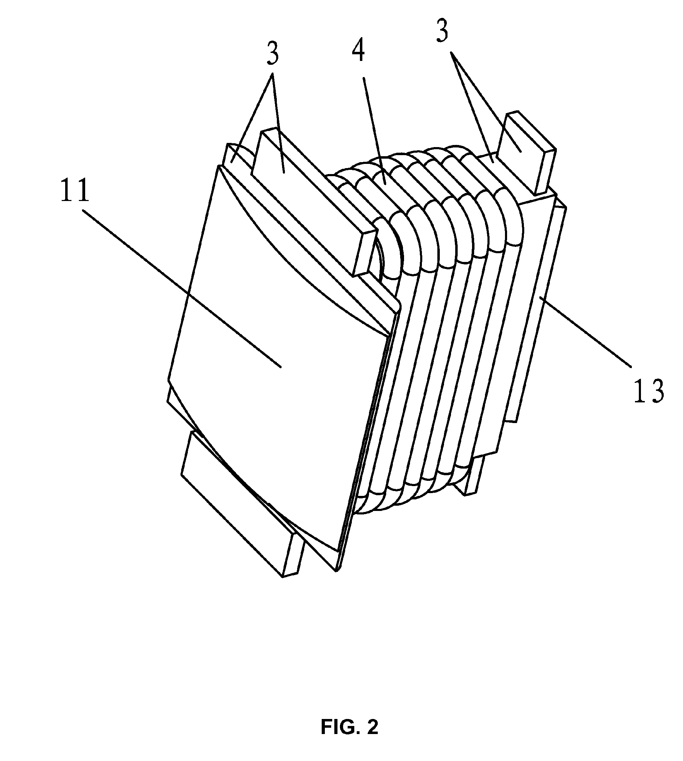

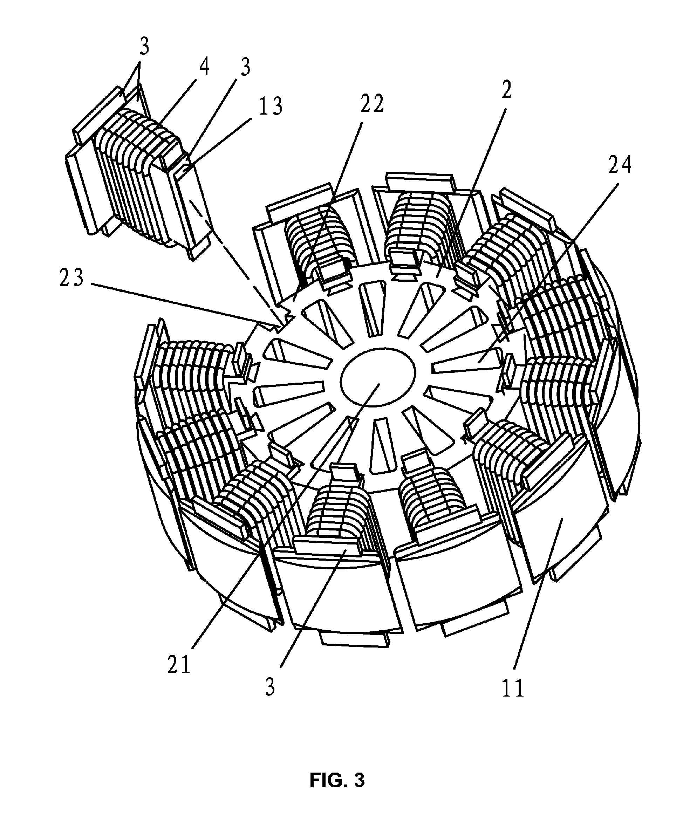

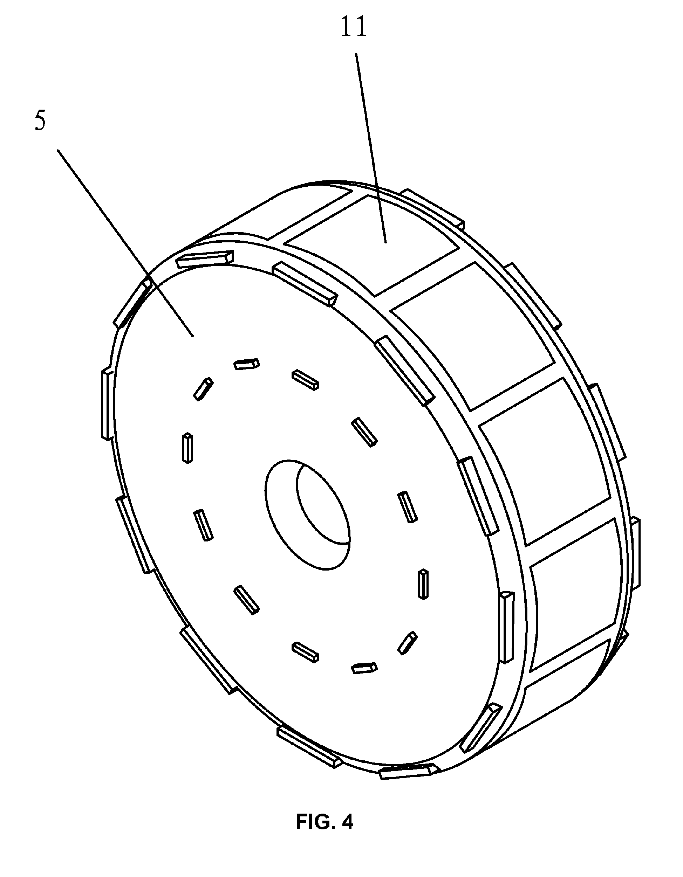

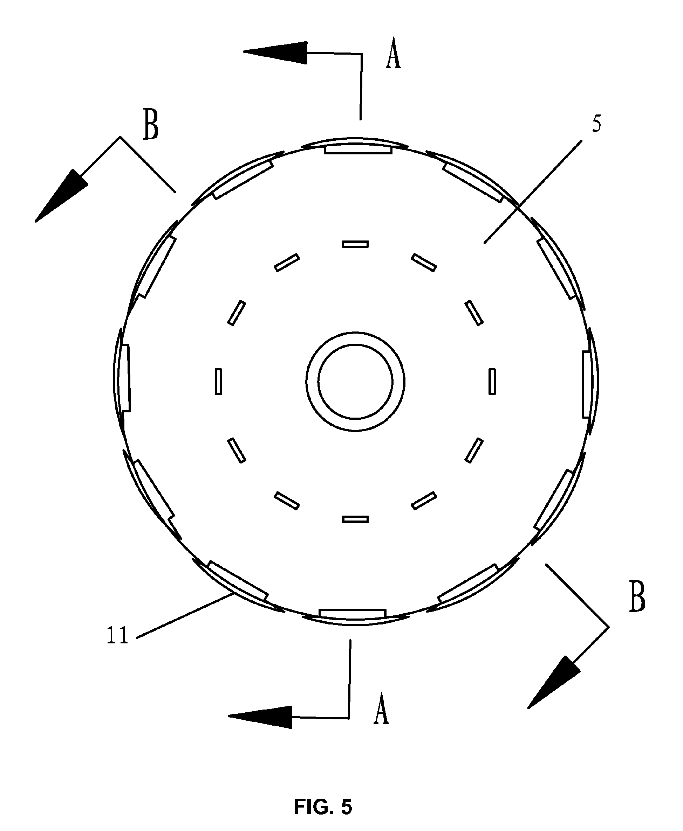

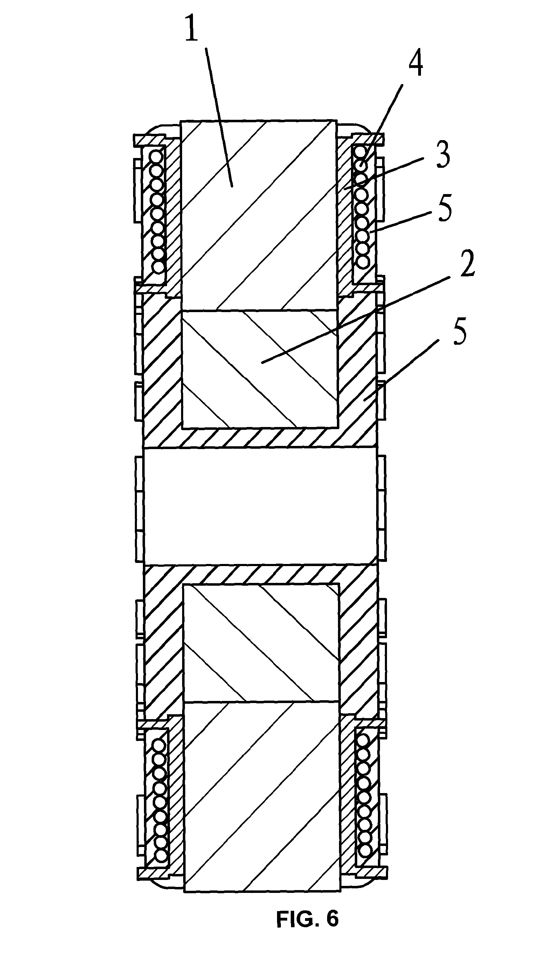

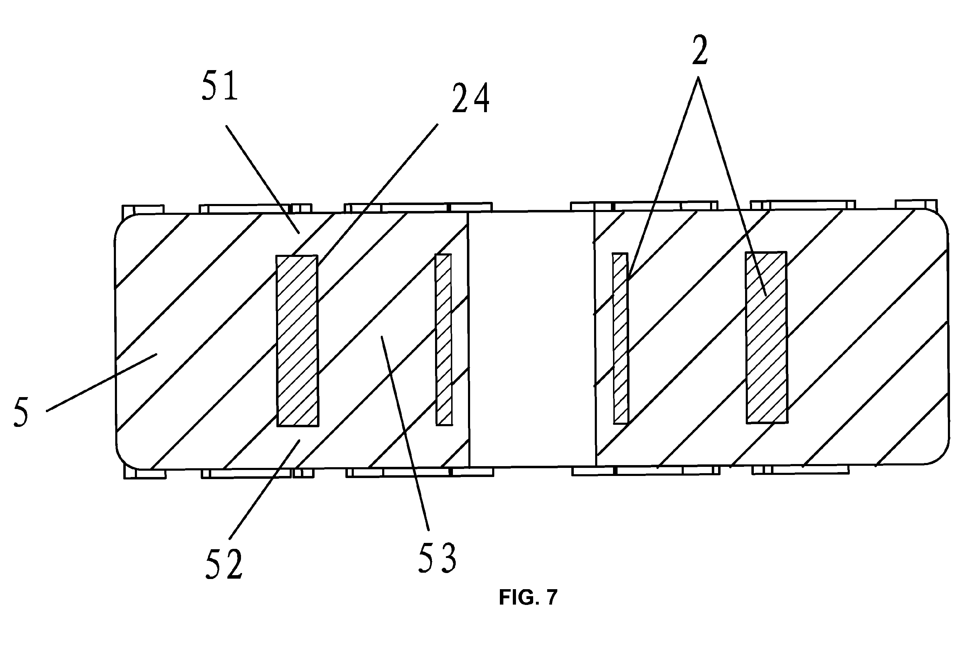

As shown in FIGS. 1-7, a stator for a brushless external-rotor motor comprises a stator core, a winding 3 and an end insulator 4. The stator core comprises a yoke part 2 and a tooth part 1 which are separated. The tooth part 1 is formed by overlapping a plurality of silicon-steel sheets and comprises a tooth crown 11, a tooth root part 12 and a clamping part 13. The end insulator 4 is sleeved on the tooth root part 12. The winding 3 is wound on the end insulator 4. The end insulator 4 is arranged at the clamping part 13 in a protruding manner, and the clamping part 13 is formed at the tail part of the tooth part 1. The yoke part 2 is formed by molding permeability magnetic material. A mounting hole 21 is formed in the center of the yoke part. A plurality of lug bosses 22 protrudes at intervals on the outer side of the yoke part 2. A clamping groove 23 is formed between two connected lug bosses 22. The clamping part 13 of the tooth part 1 is nested in the clamping groove 23. The stator core, the winding 3 and the end insulator 4 are clad with an injection mold 5. The permeability magnetic material used for forming the yoke part 2 adopts sendust material. The clamping part 13 is a dovetail lug boss. The clamping groove 23 is a dovetail groove. The injection mold 5 comprises an upper end plate 51 and a lower end plate 52 which are positioned at two ends of the stator core respectively, and a connecting column 53. The connecting column 53 is connected with the upper end plate 51 and the lower end plate 52. A plurality of through holes 24 is circumferentially formed on the yoke part 2, one part of the connecting column 53 penetrates the through holes 24, and the other part is positioned outside the lug bosses 22. The tooth part 1 comprises a tooth crown 11 on an outer side, and the tooth crown is exposed out of the injection mold 5.

The method for manufacturing the stator for a brushless external-rotor motor comprises the following steps:

(A1) manufacturing a certain amount of stamped silicon-steel sheets according to the shape of the tooth part 1, and overlapping the silicon-steel sheets into the tooth part 1;

(A2) sleeving the end insulator 4 outside the tooth part 1, and then winding the winding 3 on the end insulator 4;

(A3) according to the shape of the yoke part 2, molding the yoke part 2 with sendust permeability magnetic material;

(A4) nesting a plurality of tooth parts 1 installed with the end insulator 4 and the winding 3 on the outer side of the yoke part 2;

(A5) integrating the end insulator 4, the winding 3, the tooth part 1, and the yoke part 2 by injection-molding.

The stator core comprises a yoke part 2 and a tooth part 1 which are separated. The tooth part 1 is formed by a plurality of silicon-steel sheets. The yoke part 2 is formed by molding permeability magnetic material. A mounting hole 21 is formed in the center of the yoke part 2. The yoke part 2 is clamped with the tooth part 1. There is no material waste in the manufacture of the yoke part. The tooth part has a simple structure and small volume. Therefore, the material waste in the stamping process is reduced to the utmost extent. The manufacturing cost of the stator core is reduced, after calculation, compared with the traditional core formed by integral stamping and overlapping, the cost of the stator core manufactured in this invention is reduced by 15%-30%, and the processing and the winding are convenient.

## Claims

1. A stator for a brushless external-rotor motor, comprising:
a) a stator core, the stator core comprising a yoke part and a tooth part which are separated, the tooth part comprising a clamping part;
b) a winding; and
c) an end insulator;
**characterized in that**
the tooth part is formed by overlapping a plurality of silicon-steel sheets;
the end insulator is sleeved on the tooth part;
the winding is wound on the end insulator;
the yoke part is formed by molding permeability magnetic material and comprises a mounting hole in a center;
a plurality of lug bosses protrudes at intervals on an outer side of the yoke part;
a clamping groove is formed between two connected lug bosses; and
the clamping part of the tooth part is nested in the clamping groove.

2. The stator of claim 1, **characterized in that** the stator core, the winding, and the end insulator are clad with an injection mold.

3. The stator of claim 1 or 2, **characterized in that** the permeability magnetic material adopts sendust material.

4. The stator of claim 3, **characterized in that** the clamping part is a dovetail lug boss, and the clamping groove is a dovetail groove.

5. The stator of claim 2, **characterized in that** the injection mold comprises an upper end plate and a lower end plate which are positioned at two ends of the stator core respectively, and a connecting column, the connecting column is connected with the upper end plate and the lower end plate.

6. The stator of claim 5, **characterized in that** a plurality of through holes is circumferentially formed on the yoke part, and one part of the connecting column penetrates the through holes.

7. The stator of claim 6, **characterized in that** the other part of the connecting column is positioned outside the lug bosses.

8. The stator of claim 2, **characterized in that** the tooth part comprises a tooth crown on an outer side, and the tooth crown is exposed out of the injection mold.

9. A method for manufacturing a stator for a brushless external-rotor motor of claim 1, the method comprising the following steps:
a) manufacturing stamped silicon-steel sheets according to a shape of the tooth part, and overlapping the silicon-steel sheets into the tooth part;
b) sleeving the end insulator outside the tooth part, and winding the winding on the end insulator;
c) molding the yoke part with sendust permeability magnetic material according to a shape of the yoke part;
d) nesting a plurality of tooth parts installed with the end insulator and the winding on the outer side of the yoke part; and
e) integrating the end insulator, the winding, the tooth part, and the yoke part by injection-molding.
